(19) Europäisches Patentamt / European Patent Office / Office européen des brevets

(11) **EP 4 386 457 A1**

(12) **EUROPEAN PATENT APPLICATION**
published in accordance with Art. 153(4) EPC

(43) Date of publication:
**19.06.2024 Bulletin 2024/25**

(21) Application number: **22872062.9**

(22) Date of filing: **22.09.2022**

(51) International Patent Classification (IPC):
**G02B 6/32** (2006.01)    **H04B 10/11** (2013.01)

(52) Cooperative Patent Classification (CPC):
**G02B 1/00; G02B 6/32; G02B 26/08; G02B 27/00; G02F 1/13; H04B 10/11; H04B 10/40**

(86) International application number:
**PCT/CN2022/120557**

(87) International publication number:
**WO 2023/046018 (30.03.2023 Gazette 2023/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.09.2021 CN 202111131236**

(71) Applicant: **Huawei Technologies Co., Ltd.**
**Shenzhen, Guangdong 518129 (CN)**

(72) Inventors:
• XIE, Zhipeng
  **Shenzhen, Guangdong 518129 (CN)**
• ZENG, Yan
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **OPTICAL TRANSMISSION DEVICE AND SPACE OPTICAL COMMUNICATION DEVICE**

(57) An optical transmission device and a space optical communication device are provided. The optical transmission device includes N fiber collimators (20), a first lens group (30), a second lens group (50), and a beam deflection apparatus (40). The first lens group (30) and the second lens group (50) constitute a 4F system. The N fiber collimators (20) are configured to respectively convert N input optical signals into N channels of spatial light. The first lens group (30) is configured to perform beam reduction on each of the N channels of spatial light. The beam deflection apparatus (40) is configured to adjust a deflection direction of at least one of N channels of spatial light obtained through beam reduction. The second lens group (50) is configured to perform beam expansion on each channel of spatial light emitted from the beam deflection apparatus (40). A length of an optical path for transmitting one channel of target spatial light in the N channels of spatial light from the first lens group (30) to the beam deflection apparatus (40) is L1. A length of an optical path for transmitting the target spatial light from the beam deflection apparatus (40) to the second lens group (50) is L2. A sum of L1 and L2 is equal to twice an effective focal length of the first lens group (30), and L1 is not equal to L2.

FIG. 5(a)

## Description

This application claims priority to Chinese Patent Application No. 202111131236.5, filed with the China National Intellectual Property Administration on September 26, 2021 and entitled "OPTICAL TRANSMISSION DEVICE AND SPACE OPTICAL COMMUNICATION DEVICE", which is incorporated herein by reference in its entirety.

## TECHNICAL FIELD

This application relates to the field of space optical communication, and in particular, to an optical transmission device and a space optical communication device.

## BACKGROUND

Free-space optical communication is a new communication technology that shares large bandwidth of fibers and wireless mobility, and is one of important manners of real-time access in indoor areas, office areas, and campuses. In a specific application scenario, an access point (access point, AP) needs to communicate with a plurality of stations (station, STA). For example, in a home scenario, an AP placed on a roof needs to communicate with STAs such as a mobile phone, a television, and a computer. For another example, in an office area scenario, the AP needs to communicate with a computer on each work station.

To ensure that the AP can normally communicate with the plurality of STAs, the AP first needs to split one channel of emitted light to obtain a plurality of beams, and then adjusts an emission direction of each beam based on a location of each STA, so that each beam can be transmitted to a corresponding STA. However, locations of the STAs are not always fixed, and an application effect is not ideal in a scenario in which there are a large quantity of widely distributed STAs with high mobility.

## SUMMARY

Embodiments of this application provide an optical transmission device and a space optical communication device, and an application effect is ideal in a scenario in which mobility of a STA is high.

According to a first aspect, this application provides an optical transmission device. The optical transmission device includes N fiber collimators, a first lens group, a second lens group, and a beam deflection apparatus. N is an integer greater than 1. An effective focal length of the first lens group is equal to an effective focal length of the second lens group. Specifically, the N fiber collimators are configured to respectively convert N input optical signals into N channels of spatial light. The first lens group is configured to perform beam reduction on each of the N channels of spatial light. The beam deflection apparatus is configured to adjust a deflection direction of at least one of N channels of spatial light obtained through beam reduction. The second lens group is configured to perform beam expansion on each channel of spatial light emitted from the beam deflection apparatus. A length of an optical path for transmitting one channel of target spatial light in the N channels of spatial light from the first lens group to the beam deflection apparatus is L1. A length of an optical path for transmitting the target spatial light from the beam deflection apparatus to the second lens group is L2. A sum of L1 and L2 is equal to twice an effective focal length of the first lens group, and L1 is not equal to L2.

In this implementation, if the beam deflection apparatus adjusts a deflection direction of the target spatial light, an angle of emergence at which the target spatial light is emitted from the second lens group is a first angle of emergence; or if the beam deflection apparatus does not adjust a deflection direction of the target spatial light, an angle of emergence at which the target spatial light is emitted from the second lens group is a second angle of emergence. The first angle of emergence is different from the second angle of emergence. In other words, a location of the beam deflection apparatus can be designed, so that the beam deflection apparatus can effectively adjust a deflection direction of spatial light. Even if a STA in space moves, the deflection direction of the spatial light can be flexibly controlled, so that the spatial light is aligned with a corresponding STA. Therefore, an application effect is ideal in a scenario in which mobility of the STA is high.

In a possible implementation, the beam deflection apparatus is specifically configured to adjust, by adjusting a deflection direction of the target spatial light, an angle of emergence at which the target spatial light is emitted from the second lens group, so that a deflection angle is valid, and beams emitted from the second lens group can be flexibly emitted to different directions.

In a possible implementation, at least two of the N channels of spatial light output by the N fiber collimators are converged at an intersection point. Because the N channels of spatial light output by the N fiber collimators are convergent, N channels of spatial light emitted from the first lens group are incident into the beam deflection apparatus at a small angle. This design manner can also reduce stray light crosstalk.

In a possible implementation, the N fiber collimators are distributed on a spherical surface, and an intersection point of convergence of the N channels of spatial light output by the N fiber collimators is a sphere center. The sphere center is located between the spherical surface and the first lens group, and a distance between the sphere center and the first lens group is equal to the effective focal length of the first lens group. Because the N channels of spatial light output by the N fiber collimators are convergent, N channels of spatial light emitted from the first lens group are vertically incident into the beam deflection apparatus. This design manner can minimize stray light crosstalk.

In a possible implementation, the N fiber collimators are distributed on a curved surface, the N channels of spatial light output by the N fiber collimators are converged at a plurality of intersection points, and the plurality of intersection points are located between the curved surface and the first lens group. In the foregoing manner, the N fiber collimators may alternatively be distributed on a curved surface other than a spherical surface, and the N channels of spatial light output by the N fiber collimators may alternatively be converged at a plurality of intersection points, so that scalability of this solution is improved.

In a possible implementation, the optical transmission device further includes a third lens group, and the third lens group is configured to perform beam reduction on each channel of spatial light obtained through beam expansion, to increase an angle of view of each channel of spatial light. In this implementation, because the optical transmission device provided in this application resolves a problem of an invalid deflection direction, the third lens group is added on this basis to increase an angle of view of each channel of spatial light emitted from the optical transmission device. A larger range can be covered by adjusting a deflection direction of each channel of spatial light. Therefore, an application effect is more ideal in a scenario in which there are a relatively large quantity of STAs and the STAs are widely distributed. In addition, on the basis of a design manner in which the N fiber collimators are distributed on a spherical surface or another curved surface, N channels of spatial light emitted from the second lens group are also convergent, so that an entrance pupil of the third lens group is reduced, thereby facilitating miniaturization design of the third lens group.

In a possible implementation, a distance between the third lens group and the second lens group is equal to the effective focal length of the second lens group, so that the N channels of spatial light emitted by the second lens group can be incident from a same location of the third lens group to a greatest extent, to further reduce an entrance pupil of the third lens group, thereby better facilitating miniaturization design of the third lens group.

In a possible implementation, the beam deflection apparatus is located between the first lens group and the second lens group. The beam deflection apparatus is configured to transparently transmit, to the second lens group, spatial light whose deflection direction is adjusted and spatial light whose deflection direction is not adjusted. In the foregoing manner, a specific implementation is provided with reference to a transmissive beam deflection apparatus, so that feasibility of this solution is improved.

In a possible implementation, the beam deflection apparatus is a transmissive liquid crystal on silicon (Liquid crystal on silicon, LCoS), an optical phased array, or a metasurface.

In a possible implementation, the optical transmission device further includes a beam splitting apparatus. The beam splitting apparatus is configured to transparently transmit, to the beam deflection apparatus, the N channels of spatial light that are obtained through beam reduction and that come from the first lens group. The beam deflection apparatus is configured to reflect spatial light whose deflection direction is adjusted and spatial light whose deflection direction is not adjusted to the beam splitting apparatus. The beam splitting apparatus is configured to reflect, to the second lens group, each channel of spatial light reflected by the beam deflection apparatus. In the foregoing manner, another specific implementation is provided with reference to a reflective beam deflection apparatus, so that flexibility of this solution is improved.

In a possible implementation, the beam deflection apparatus is a reflective LCoS or a micro-electromechanical system (Micro-Electro-Mechanical System, MEMS) micro-mirror.

In a possible implementation, a size of a spot existing after the second lens group performs beam expansion on each channel of spatial light is the same as a size of a spot existing before the first lens group performs beam reduction on each channel of spatial light, so that a requirement in a specific scenario is met.

According to a second aspect, this application provides a space optical communication device. The space optical communication device includes an optical transceiver apparatus and the optical transmission device described in any one of the foregoing implementations of the first aspect. N output ends of the optical transceiver apparatus are respectively connected to input ends of N fiber collimators in the optical transmission device through N fibers, and N is an integer greater than 1. The optical transceiver apparatus is configured to respectively output N optical signals to the N fiber collimators through the N fibers.

In a possible implementation, the optical transceiver apparatus includes an optical transceiver and an optical splitter. An output end of the optical transceiver is connected to an input end of the optical splitter through a fiber, and N output ends of the optical splitter are respectively connected to the input ends of the N fiber collimators through the N fibers. The optical transceiver is configured to output an optical signal. The optical splitter is configured to: split the optical signal to obtain N optical signals, and respectively transmit the N optical signals to the N fiber collimators through the N fibers. In the foregoing manner, a specific type of the optical transceiver apparatus is provided, so that feasibility of this solution is improved.

In a possible implementation, the optical transceiver apparatus includes N optical transceivers, and output ends of the N optical transceivers are respectively connected to the input ends of the N fiber collimators through the N fibers. The N optical transceivers are configured to: output N optical signals, and respectively transmit the N optical signals to the N fiber collimators through the N fibers. In the foregoing manner, another specific type of the optical transceiver apparatus is provided, so that scalability of this solution is improved.

In a possible implementation, wavelengths of at least two of the N optical signals are different, so that application to a multi-wavelength application scenario is supported.

In a possible implementation, the space optical communication device is an AP.

In a possible implementation, the optical transceiver apparatus is an optical line terminal (optical line terminal, OLT).

In this embodiment of this application, the first lens group and the second lens group constitute a 4F system, a length of an optical path for transmitting spatial light from the first lens group to the beam deflection apparatus is L1, a length of an optical path for transmitting the spatial light from the beam deflection apparatus to the second lens group is L2, a sum of L1 and L2 is equal to twice the effective focal length of the first lens group, and L1 is not equal to L2. In this design manner, for a same channel of spatial light, if a deflection direction of the spatial light is adjusted, an angle of emergence at which the spatial light is emitted from the second lens group is a first angle of emergence; or if a deflection direction of the spatial light is not adjusted, an angle of emergence at which the spatial light is emitted from the second lens group is a second angle of emergence. The first angle of emergence is different from the second angle of emergence. In other words, a location of the beam deflection apparatus can be designed, so that the beam deflection apparatus can effectively adjust a deflection direction of spatial light. Even if a STA in space moves, the deflection direction of the spatial light can be flexibly controlled, so that the spatial light is aligned with a corresponding STA. Therefore, an application effect is ideal in a scenario in which mobility of the STA is high.

## BRIEF DESCRIPTION OF DRAWINGS

FIG. 1 is a schematic diagram of an architecture of a space optical communication system;
FIG. 2 is a schematic diagram of a structure of a 4F system according to this application;
FIG. 3 is a schematic diagram of an invalid deflection direction based on a 4F system according to this application;
FIG. 4 is a schematic diagram of stray light crosstalk according to this application;
FIG. 5(a) is a first schematic diagram of a structure of an optical transmission device according to an embodiment of this application;
FIG. 5(b) is a second schematic diagram of a structure of an optical transmission device according to an embodiment of this application;

FIG. 6 is a schematic diagram of a valid deflection direction according to an embodiment of this application;
FIG. 7 is a third schematic diagram of a structure of an optical transmission device according to an embodiment of this application;
FIG. 8 is a fourth schematic diagram of a structure of an optical transmission device according to an embodiment of this application;
FIG. 9 is a fifth schematic diagram of a structure of an optical transmission device according to an embodiment of this application;
FIG. 10 is a sixth schematic diagram of a structure of an optical transmission device according to an embodiment of this application; and
FIG. 11 is a seventh schematic diagram of a structure of an optical transmission device according to an embodiment of this application.

## DESCRIPTION OF EMBODIMENTS

Embodiments of this application provide an optical transmission device and a space optical communication device, and an application effect is ideal in a scenario in which mobility of a STA is high. In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way is interchangeable in proper circumstances so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

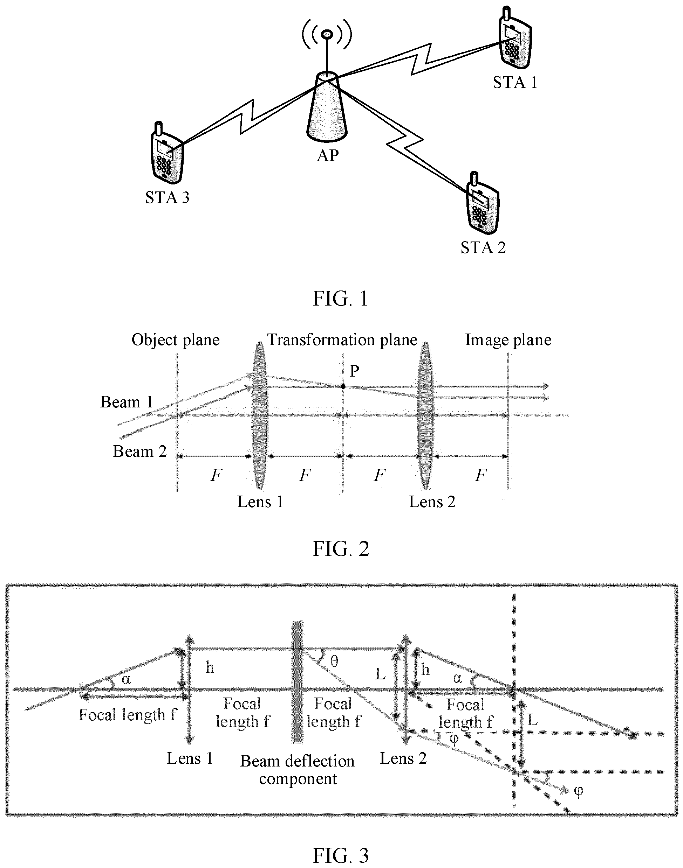

FIG. 1 is a schematic diagram of an architecture of a space optical communication system. As shown in FIG. 1, the free-space optical communication system includes an access point (access point, AP) and a plurality of stations (station, STA). It should be understood that the AP in the free-space optical communication system is not completely the same as an AP in a conventional wireless local area network. In the free-space optical communication system, beams emitted by the AP and the STA need to be aligned, to perform space optical communication. For example, in a home scenario, the AP may be placed on a roof, and the STA may be specifically a mobile phone, a television, a computer, or the like in an indoor environment. Because locations of the STAs in space are not always fixed, to ensure that the AP can normally communicate with the plurality of STAs, the AP needs to have a capability of flexibly adjusting a beam deflection direction, and a range covered by a beam emitted by the AP needs to be as large as possible, so that application to a scenario in which there are a relatively large quantity of STAs, the STAs are widely distributed, and mobility of the STAs is high is supported.

The following first describes some technical terms in this application.

(1) Spatial frequency: In Fourier transform, a frequency relative to time may be interpreted as a quantity of periodicities in a unit time period. In Fourier optics, coordinates on a spatial spectrum can be compared to a quantity of periodicities that the sine wave travels in a unit distance. The dimension is a reciprocal of the distance, and this physical quantity is the spatial frequency. In essence, the spatial frequency corresponds to a beam emitted from a same light source. Assuming that the light source is placed on a main optical axis, a beam that deviates from the main optical axis by a smaller angle has a smaller spatial frequency, namely, a lower frequency, and a beam that deviates from the main optical axis by a larger included angle has a larger spatial frequency, namely, a higher frequency.

(2) 4F system: FIG. 2 is a schematic diagram of a structure of a 4F system according to this application. As shown in FIG. 2, the 4F system includes two lenses: a lens 1 and a lens 2, and a focal length of each of the lens 1 and the lens 2 is F. A front focal point of the lens 1 is located on an object plane. A rear focal point of the lens 1 and a front focal point of the lens 2 overlap on a transformation plane. A rear focal point of the lens 2 is located on an image plane. There are four focal lengths F between the object plane and the image plane, and therefore, the system is referred to as a 4F system.

(3) Fourier focal plane: The 4F system shown in FIG. 2 has a feature that according to Fourier optical transform, an image formed by a beam incident from a front focal plane of a lens on a rear focal plane of the lens is Fourier transform of object light on the front focal plane. Therefore, a rear focal plane of the lens 1 is also a front focal plane of the lens 2, and spatial arrangement thereof is spatial frequencies. Therefore, the focal plane is also referred to as a Fourier focal plane. A feature thereof is that beams incident from the front focal plane at a same angle intersect at a same point on the Fourier focal plane. For example, beams 1 and 2 shown in FIG. 2 intersect at a point P on the Fourier focal plane. This is determined by a spatial frequency feature in Fourier optics, because that the beams incident into the lens 1 from the front focal plane at the same angle means that the two beams have a same spatial frequency, and therefore intersect at the same point on the Fourier focal plane. In addition, because the two beams are emitted from the same point on the Fourier focal plane, in other words, emergent light of the two beams has the same spatial frequency, regardless of angles at which the two beams are emitted from the Fourier focal plane, after the two beams pass through the lens 2, included angles between the two beams emitted from the rear focal plane of the lens 2 and the main optical axis are definitely the same.

(4) Invalid deflection direction: FIG. 3 is a schematic diagram of an invalid deflection direction based on a 4F system according to this application. As shown in FIG. 3, if a beam deflection component is placed on the Fourier focal plane, an angle of emergence of a beam passing through the lens 2 is not changed regardless of how the beam deflection component changes a deflection angle of the beam. For example, an angle of incidence at which a beam is incident into the lens 1 is $\alpha$, a distance between a point of incidence at which the beam is incident into the lens 1 and an optical axis is h, and $\alpha = h/f$. If the beam deflection component does not adjust a deflection direction of the beam, an angle of emergence at which the beam is emitted from the lens 2 is also $\alpha$. If the beam deflection component adjusts a deflection direction of the beam, and a deflection angle is $\theta$, a distance between a point of incidence, on the lens 2, of the beam whose deflection direction is not adjusted and a point of incidence, on the lens 2, of the beam whose deflection direction is adjusted is L, and $\theta = L/f$. An angle of emergence at which the beam whose deflection direction is adjusted is emitted from the lens 2 is $\varphi$, where $\varphi = L - (L - h)/f = h/f = \alpha$. It can be learned that regardless of whether the beam deflection component adjusts the deflection direction of the beam, the angle of emergence at which the beam is emitted from the lens 2 is equal to $\alpha$. The reason is that the angle of emergence of the beam is not determined by the angle applied by the beam deflection component, but by a location of the beam on the Fourier focal plane, in other words, the angle of emergence of the beam is determined by a spatial frequency of the beam. Therefore, if a beam deflector is placed on the Fourier focal plane, a problem of an invalid deflection direction occurs.

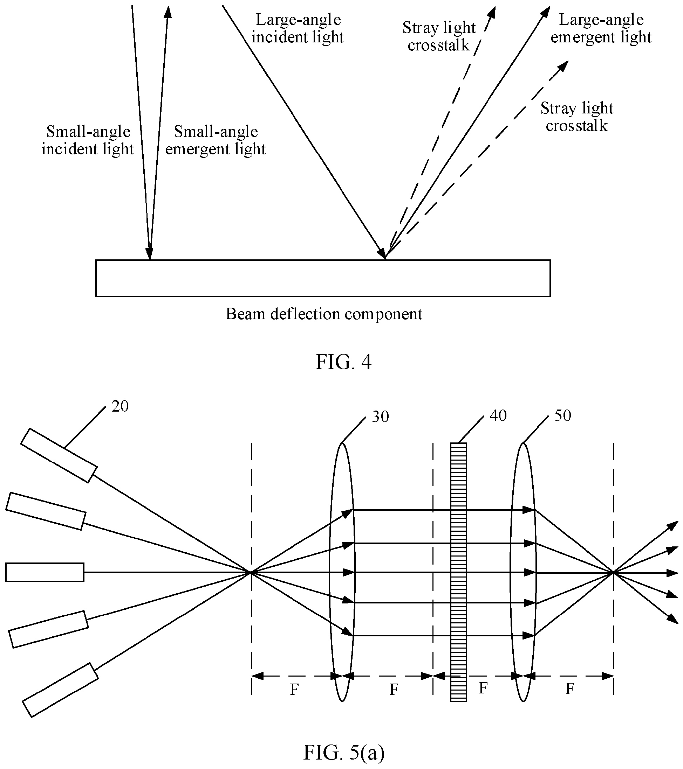

(5) Stray light crosstalk: FIG. 4 is a schematic diagram of stray light crosstalk according to this application. As shown in FIG. 4, if an incident beam is incident into the beam deflection component at a large angle, stray light crosstalk shown by dashed lines in FIG. 4 occurs in the beam emitted from the beam deflection component. If an incident beam is incident into the beam deflection component at a small angle, basically, stray light crosstalk does not occur in the beam emitted from the beam deflection component.

The following describes an optical transmission device provided in embodiments of this application.

FIG. 5(a) is a first schematic diagram of a structure of an optical transmission device according to an embodiment of this application. As shown in FIG. 5(a), the optical transmission device includes N fiber collimators 20, a first lens group 30, a beam deflection apparatus 40, and a second lens group 50. N is an integer greater than 1. The first lens group 30 and the second lens group 50 constitute a 4F system. It should be understood that a quantity of lenses in the first lens group 30 and a quantity of lenses in the second lens group 50 are not limited in this application. The first lens group 30 or the second lens group 50 may be considered as an equivalent lens. The first lens group 30 or the second lens group 50 has an equivalent focal point, also referred to as an effective focal point. Correspondingly, F shown in FIG. 5(a) is an equivalent focal length of the first lens group 30 or the second lens group 50, also referred to as an effective focal length. An effective focal length of the first lens group 30 is equal to an effective focal length of the second lens group 50.

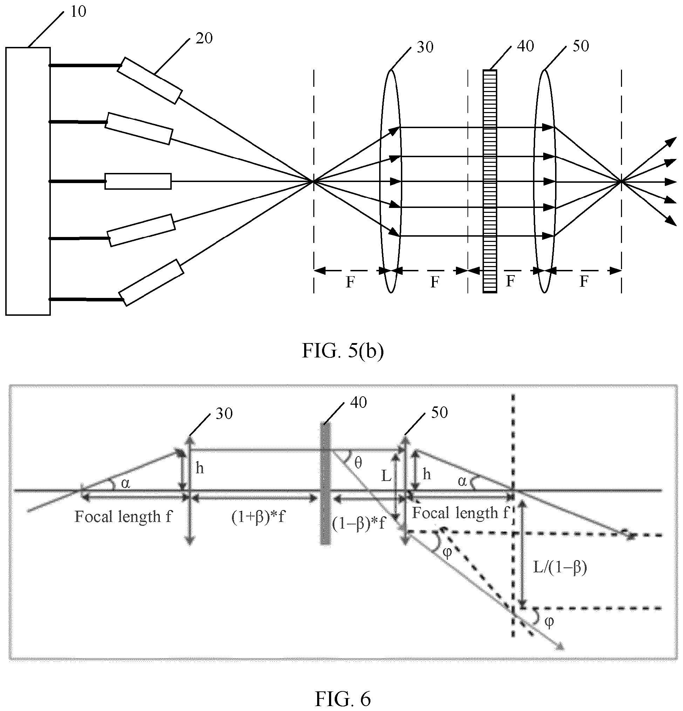

FIG. 5(b) is a second schematic diagram of a structure of an optical transmission device according to an embodiment of this application. As shown in FIG. 5(b), in some possible implementations, the optical transmission device further includes an optical transceiver apparatus 10. N output ends of the optical transceiver apparatus 10 are respectively connected to input ends of the N fiber collimators 20 through N fibers. The optical transceiver apparatus 10 is configured to respectively output N optical signals to the N fiber collimators 20 through the N fibers. It should be understood that the optical transmission device shown in FIG. 5(b) may be considered as a space optical communication device. The optical transmission device may be specifically an AP, and the AP needs to communicate with a plurality of STAs in space. The optical transceiver apparatus 10 may be specifically an apparatus having an optical transceiver function, for example, an optical line terminal (optical line terminal, OLT).

Specifically, the N fiber collimators 20 are configured to respectively convert the N input optical signals into N channels of spatial light. Each channel of spatial light is parallel light. To adapt to a size of the beam deflection apparatus 40, the first lens group 30 performs beam reduction on each of the N channels of spatial light, so that N channels of spatial light obtained through beam reduction are separately incident into different locations of the beam deflection apparatus 40. The beam deflection apparatus 40 adjusts, as required, a deflection direction of at least one of the N channels of spatial light obtained through beam reduction. Further, to ensure a transmission distance of each channel of spatial light, the second lens group 50 performs beam expansion on each channel of spatial light emitted from the beam deflection apparatus 40, and propagates each channel of spatial light obtained through beam expansion. It should be understood that a proportion of beam reduction performed by the first lens group 30 on spatial light and a proportion of beam expansion performed by the second lens group 50 on spatial light are not limited in this application. In a possible implementation, the first lens group 30 performs m-time beam reduction on incident spatial light, and the second lens group 50 performs m-time beam expansion on incident spatial light, so that a size of a spot existing after the second lens group 50 performs beam expansion is the same as a size of a spot existing before the first lens group 30 performs beam reduction.

It should be noted that this application imposes a requirement on location design of the beam deflection apparatus 40, to resolve the foregoing problem of invalid deflection. One channel of target spatial light in the N channels of spatial light is used as an example for description. Specifically, a length of an optical path for transmitting the target spatial light from the first lens group 30 to the beam deflection apparatus 40 is L1, and a length of an optical path for transmitting the target spatial light from the beam deflection apparatus 40 to the second lens group 50 is L2. A sum of L1 and L2 is equal to twice the effective focal length of the first lens group, that is, 2F. In addition, L1 is not equal to L2. In other words, an example in which the beam deflection apparatus 40 is located between the first lens group 30 and the second lens group 50 shown in FIG. 5(a) is used, and in the 4F system formed by the first lens group 30 and the second lens group 50, the beam deflection apparatus 40 is located at a location outside the Fourier focal plane. In this way, effective deflection can be implemented. The following provides detailed descriptions with reference to FIG. 6.

FIG. 6 is a schematic diagram of a valid deflection direction according to an embodiment of this application. As shown in FIG. 6, the target spatial light is used as an example for description. If the beam deflection apparatus 40 does not adjust a deflection direction of the target spatial light, an angle of emergence at which the target spatial light is emitted from the second lens group 50 is $\alpha$. A distance between a point of incidence at which the target spatial light is incident into the second lens group 50 and an optical axis of the second lens group 50 is h, the effective focal length of the second lens group is f, and $\alpha = h/f$. If the beam deflection apparatus 40 adjusts a deflection direction of the target spatial light, and a deflection angle is $\theta$, an angle of emergence at which the target spatial light is emitted from the second lens group 50 is $\varphi$. A distance between a point of incidence, on the second lens group 50, of the target spatial light whose deflection direction is not adjusted and a point of incidence, on the second lens group 50, of the target spatial light whose deflection direction is adjusted is L, and $\theta = L/f$. A distance between the beam deflection apparatus 40 and the first lens group 30 is $(1 + \beta) * f$, and a distance between the beam deflection apparatus 40 and the second lens group 50 is $(1 - \beta) * f$, where $0 < \beta < 1$. It can be learned through calculation that $\varphi =$

$$\frac{\left[\left(\frac{L}{1-\beta}\right) - (L-h)\right]}{f} = \left(\frac{h}{f}\right) + \left(\frac{\beta * L}{(1-\beta) * f}\right) = \alpha + \left(\frac{\beta * L}{(1-\beta) * f}\right)$$

. It

can be learned that α is not equal to φ. Therefore, after the beam deflection apparatus 40 applies different deflection angles to an incident beam, angles of emergence at which the beam is emitted from the second lens group 50 are also different, and a deflection direction of the beam is valid.

In this embodiment of this application, the optical transmission device may be specifically an AP. The AP needs to communicate with a plurality of STAs in space, and locations of the STAs in space are not always fixed. According to the design of this solution, the AP can effectively adjust a deflection direction of a beam. Even if a STA in space moves, the deflection direction of the spatial light can be flexibly controlled, so that the spatial light is aligned with a corresponding STA. Therefore, an application effect is ideal in a scenario in which mobility of the STA is high.

In a possible implementation, as shown in FIG. 5(a), the N channels of spatial light output by the N fiber collimators are converged at an intersection point, the intersection point is at a location before the spatial light is incident into the first lens group 30, and a distance between the intersection point and the first lens group 30 is equal to the effective focal length of the first lens group. In other words, it may be considered that the N fiber collimators are distributed on a spherical surface, the N channels of spatial light output by the N fiber collimators are converged at a sphere center, the sphere center is located between the first lens group 30 and the spherical surface, and a distance between the sphere center and the first lens group 30 is equal to the effective focal length of the first lens group. It should be understood that because the N channels of spatial light output by the N fiber collimators are convergent, N channels of spatial light emitted from the first lens group 30 are vertically incident into the beam deflection apparatus 40. Based on the principle described in FIG. 4, this design manner can minimize stray light crosstalk.

In another possible implementation, the N fiber collimators may alternatively be distributed on a curved surface other than a spherical surface, and the N channels of spatial light output by the N fiber collimators may alternatively be converged at a plurality of intersection points. This is not specifically limited herein. Similarly, because the N channels of spatial light output by the N fiber collimators are convergent, N channels of spatial light emitted from the first lens group 30 are incident into the beam deflection apparatus 40 at a small angle. Based on the principle described in FIG. 4, this design manner can also reduce stray light crosstalk.

It should be noted that in some scenarios, if tolerance to stray light crosstalk is high, the N fiber collimators may alternatively be placed in parallel, in other words, the N channels of spatial light output by the N fiber collimators are parallel, and are not convergent. The N channels of spatial light emitted from the first lens group 30 are incident into the beam deflection apparatus 40 at a large angle, and stray light crosstalk is large. It should be further noted that in some scenarios, if tolerance to stray light crosstalk is low, but locations of STAs are relatively fixed, it is feasible to only use the design in which the N fiber collimators are distributed on a spherical surface or another curved surface, but not limit a location of the beam deflection apparatus 40. In other words, the beam deflection apparatus may alternatively be located on the Fourier focal plane, and normal communication is not affected even if a deflection direction is invalid.

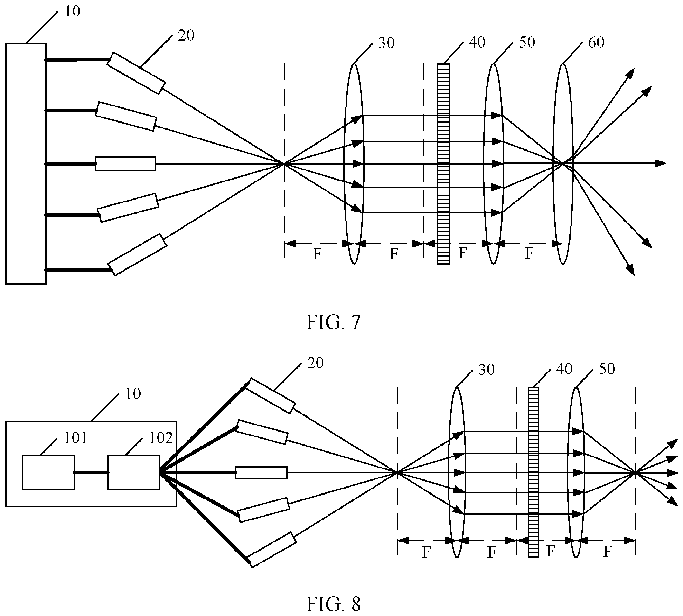

FIG. 7 is a third schematic diagram of a structure of an optical transmission device according to an embodiment of this application. As shown in FIG. 7, the optical transmission device further includes a third lens group 60. Spatial light emitted by the second lens group 50 is incident into the third lens group 60, and the third lens group 60 is configured to perform beam reduction on each channel of incident spatial light, to increase an angle of view of each channel of spatial light. For example, if a spot of spatial light emitted by the third lens group 60 is reduced by k times, correspondingly, an angle of view of the spatial light is increased by k times. Because the optical transmission device provided in this application resolves a problem of an invalid deflection direction, the third lens group 60 is added on this basis to increase an angle of view of each channel of spatial light emitted from the optical transmission device. A larger range can be covered by adjusting a deflection direction of each channel of spatial light. Therefore, an application effect is more ideal in a scenario in which there are a relatively large quantity of STAs and the STAs are widely distributed.

In some possible implementations, a distance between the third lens group 60 and the second lens group 50 is equal to the effective focal length of the second lens group 50. On the basis of a design manner in which the N fiber collimators are distributed on a spherical surface or another curved surface, N channels of spatial light emitted from the second lens group 50 are also convergent, so that an entrance pupil of the third lens group 60 is reduced, thereby facilitating miniaturization design of the third lens group 60. It should be noted that in some scenarios, the second lens group 50 and the third lens group 60 may be considered as one lens group, and design of the lens group may be changed based on an actual requirement, so that an angle of view of spatial light emitted from the lens group meets a requirement.

FIG. 8 is a fourth schematic diagram of a structure of an optical transmission device according to an embodiment of this application. As shown in FIG. 8, the optical transceiver apparatus 10 includes an optical transceiver 101 and an optical splitter 102. An output end of the optical transceiver 101 is connected to an input end of the optical splitter 102 through a fiber. N output ends of the optical splitter 102 are respectively connected to the input ends of the N fiber collimators 20 through the N fibers. Specifically, the optical transceiver 101 is configured to output an optical signal, and the optical splitter 102 is configured to: split the optical signal output by the optical transceiver 101 to obtain N optical signals, and respectively transmit the N optical signals to the N fiber collimators 20 through the N fibers. It should be noted that in some scenarios, the optical transceiver apparatus 10 may alternatively be designed in another manner. This is not specifically limited herein. For example, the optical transceiver 10 may include N optical transceivers, and output ends of the N optical transceivers are respectively connected to the input ends of the N fiber collimators through N fibers. No figure is provided herein to show this. Specifically, the N optical transceivers are configured to: output N optical signals, and respectively transmit the N optical signals to the N fiber collimators through the N fibers.

The following describes several specific implementations with reference to different types of the beam deflection apparatus. It should be noted that the beam deflection apparatus provided in this application includes but is not limited to the following types. For example, the beam deflection apparatus may be a transmissive liquid crystal on silicon (Liquid crystal on silicon, LCoS), an optical phased array, or a metasurface. The beam deflection apparatus may alternatively be a reflective LCoS or a micro-electro-mechanical system (Micro-Electro-Mechanical System, MEMS) micro-mirror. The metasurface refers to an artificial laminated material whose thickness is smaller than a wavelength, and may be used to control features such as polarization, a phase, an amplitude, and a frequency of a beam. For example, the phase is a core attribute of the beam, and an equiphase surface determines a propagation direction of the beam. The beam can be deflected by adjusting a phase of the beam.

In a first implementation, the beam deflection apparatus is a transmissive Lcos.

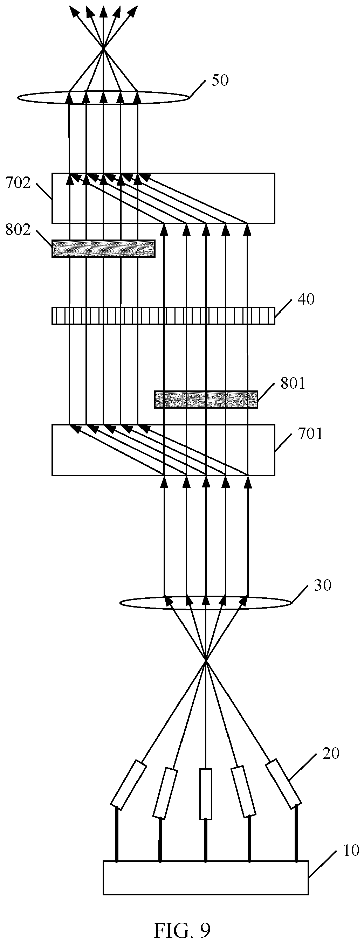

FIG. 9 is a fifth schematic diagram of a structure of an optical transmission device according to an embodiment of this application. As shown in FIG. 9, the optical transmission device further includes a polarization beam splitting apparatus 701, a polarization beam combination apparatus 702, a first polarization conversion apparatus 801, and a second polarization conversion apparatus 802. The polarization beam splitting apparatus 701 is located between the first lens group 30 and the first polarization conversion apparatus 801, the first polarization conversion apparatus 801 is located between the polarization beam splitting apparatus 701 and the LCoS 40, the second polarization conversion apparatus 802 is located between the LCoS 40 and the polarization beam combination apparatus 702, and the polarization beam combination apparatus 702 is located between the second polarization conversion apparatus 802 and the second lens group 50. Specifically, the polarization beam splitting apparatus 701 performs polarization beam splitting on the N channels of spatial light that come from the first lens group 30, to obtain N channels of first polarized light and N channels of second polarized light. The first polarization conversion apparatus 801 converts the N channels of second polarized light into N channels of first polarized light. The LCoS 40 is configured to: adjust deflection directions of the 2*N channels of first polarized light, and transparently transmit the 2*N channels of first polarized light whose deflection directions are adjusted. The second polarization conversion apparatus 802 converts N channels of first polarized light whose deflection directions are adjusted into N channels of second polarized light. The polarization beam combination apparatus 702 performs polarization beam combination on the other N channels of first polarized light that come from the LCoS 40 and the N channels of second polarized light that come from the second polarization conversion apparatus 802, and directs N channels of spatial light obtained through polarization beam combination to the second lens group 50. It should be understood that because the polarization-sensitive LCoS is used in this implementation, the polarization beam splitting apparatus 701, the polarization beam combination apparatus 702, the first polarization conversion apparatus 801, and the second polarization conversion apparatus 802 need to be used in combination to adjust a polarization state of a beam, so that emitted spatial light has high diffraction efficiency.

In a second implementation, the beam deflection apparatus is a reflective Lcos.

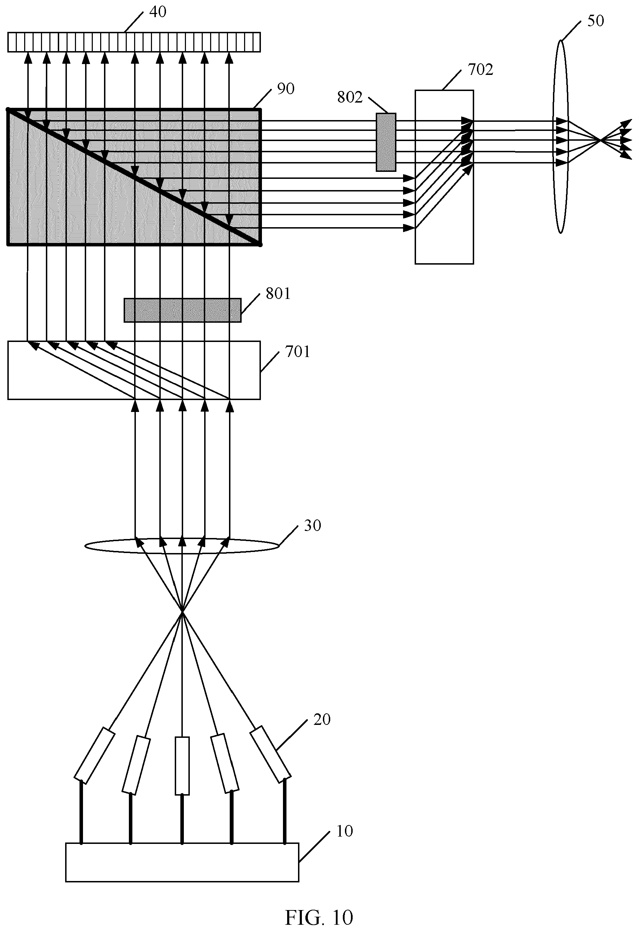

FIG. 10 is a sixth schematic diagram of a structure of an optical transmission device according to an embodiment of this application. As shown in FIG. 10, the optical transmission device further includes a polarization beam splitting apparatus 701, a polarization beam combination apparatus 702, a first polarization conversion apparatus 801, a second polarization conversion apparatus 802, and a beam splitting apparatus 90. Specifically, the polarization beam splitting apparatus 701 performs polarization beam splitting on the N channels of spatial light that come from the first lens group 30, to obtain N channels of first polarized light and N channels of second polarized light. The first polarization conversion apparatus 801 converts the N channels of second polarized light into N channels of first polarized light. The beam splitting apparatus 90 transparently transmits the 2*N channels of first polarized light to the LCoS 40. The LCoS 40 adjusts deflection directions of the 2*N channels of first polarized light, and reflects the 2*N channels of first polarized light whose deflection directions are adjusted to the beam splitting apparatus 90. The beam splitting apparatus 90 reflects N channels of first polarized light whose deflection directions are adjusted to the second polarization conversion apparatus 802, and reflects the other N channels of first polarized light whose deflection directions are adjusted to the polarization beam combination apparatus 702. The second polarization conversion apparatus 802 converts N channels of first polarized light whose deflection directions are adjusted into N channels of second polarized light. The polarization beam combination apparatus 702 performs polarization beam combination on the N channels of first polarized light whose deflection directions are adjusted and the other N channels of first polarized light whose deflection directions are adjusted, and directs N channels of spatial light obtained through polarization beam combination to the second lens group 50. It should be understood that in this implementation, the beam deflection apparatus 40 is not located between the first lens group 30 and the second lens group 50, but a sum of a length L1 of an optical path for transmitting spatial light from the first lens group 30 to the beam deflection apparatus 40 and a length L2 of an optical path for transmitting spatial light from the beam deflection apparatus 40 to the second lens group 50 is still equal to twice the effective focal length of the first lens group, that is, 2F. In addition, L1 is not equal to L2.

In a third implementation, the beam deflection apparatus is a reflective MEMS micro-mirror.

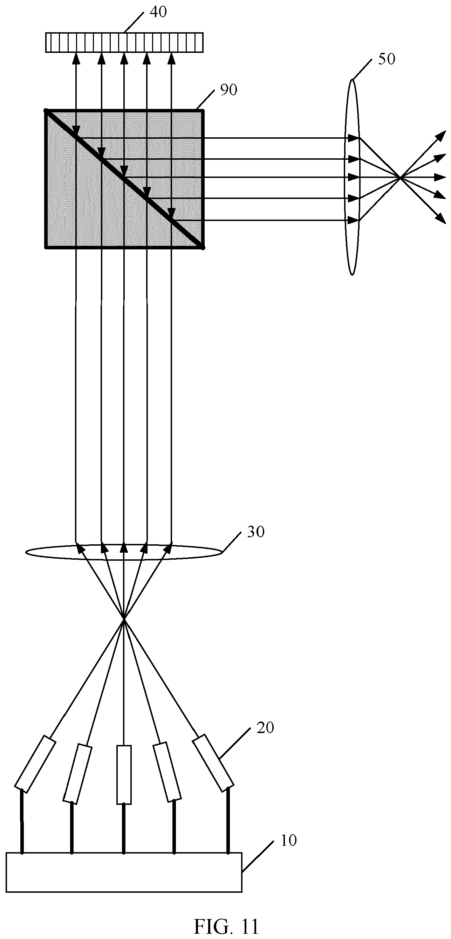

FIG. 11 is a seventh schematic diagram of a structure of an optical transmission device according to an embodiment of this application. As shown in FIG. 11, the optical transmission device further includes a beam splitting apparatus 90. Specifically, the beam splitting apparatus 90 transparently transmits, to the MEMS micro-mirror 40, N channels of spatial light that come from the first lens group 30. The MEMS micro-mirror 40 is configured to: adjust deflection directions of the N channels of spatial light, and reflect N channels of spatial light whose deflection directions are adjusted to the beam splitting apparatus 90. The beam splitting apparatus 90 further reflects the N channels of spatial light whose deflection directions are adjusted to the second lens group 50. It should be understood that in this implementation, the beam deflection apparatus 40 is not located between the first lens group 30 and the second lens group 50, but a sum of a length L1 of an optical path for transmitting spatial light from the first lens group 30 to the beam deflection apparatus 40 and a length L2 of an optical path for transmitting spatial light from the beam deflection apparatus 40 to the second lens group 50 is still equal to twice the effective focal length of the first lens group, that is, 2F. In addition, L1 is not equal to L2.

It may be understood that in the foregoing embodiments, functions of components in the AP are described by using an example in which the AP transmits spatial light to the STA. According to reversibility of an optical path, the AP also receives spatial light emitted by the STA. An operation of receiving spatial light by the AP is an inverse operation of emitting spatial light by the AP, and details are not described herein again.

It should be noted that the foregoing embodiments are only used to describe the technical solutions of this application, but not to limit the technical solutions. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. An optical transmission device, comprising N fiber collimators, a first lens group, a second lens group, and a beam deflection apparatus, wherein N is an integer greater than 1, and an effective focal length of the first lens group is equal to an effective focal length of the second lens group, wherein

   the N fiber collimators are configured to respectively convert N input optical signals into N channels of spatial light;
   the first lens group is configured to perform beam reduction on each of the N channels of spatial light;
   the beam deflection apparatus is configured to adjust a deflection direction of at least one of N channels of spatial light obtained through beam reduction;
   the second lens group is configured to perform beam expansion on each channel of spatial light emitted from the beam deflection apparatus; and
   a length of an optical path for transmitting one channel of target spatial light in the N channels of spatial light from the first lens group to the beam deflection apparatus is L1, a length of an optical path for transmitting the target spatial light from the beam deflection apparatus to the second lens group is L2, a sum of L1 and L2 is equal to twice the effective focal length of the first lens group, and L1 is not equal to L2.

2. The optical transmission device according to claim 1, wherein the beam deflection apparatus is specifically configured to adjust, by adjusting a deflection direction of the target spatial light, an angle of emergence at which the target spatial light is emitted from the second lens group.

3. The optical transmission device according to claim 1 or 2, wherein at least two of the N channels of spatial light output by the N fiber collimators are converged at an intersection point.

4. The optical transmission device according to claim 3, wherein the N fiber collimators are distributed on a spherical surface, an intersection point of convergence of the N channels of spatial light output by the N fiber collimators is a sphere center, the sphere center is located between the spherical surface and the first lens group, and a distance between the sphere center and the first lens group is equal to the effective focal length of the first lens group.

5. The optical transmission device according to claim 3, wherein the N fiber collimators are distributed on a curved surface, the N channels of spatial light output by the N fiber collimators are converged at a plurality of intersection points, and the plurality of intersection points are located between the curved surface and the first lens group.

6.  The optical transmission device according to any one of claims 1 to 5, wherein the optical transmission device further comprises a third lens group; and the third lens group is configured to perform beam reduction on each channel of spatial light obtained through beam expansion.

7.  The optical transmission device according to claim 6, wherein a distance between the third lens group and the second lens group is equal to the effective focal length of the second lens group.

8.  The optical transmission device according to any one of claims 1 to 7, wherein the beam deflection apparatus is located between the first lens group and the second lens group; and the beam deflection apparatus is configured to transparently transmit, to the second lens group, spatial light whose deflection direction is adjusted and spatial light whose deflection direction is not adjusted.

9.  The optical transmission device according to claim 8, wherein the beam deflection apparatus is a transmissive liquid crystal on silicon LCoS, an optical phased array, or a metasurface.

10. The optical transmission device according to any one of claims 1 to 7, wherein the optical transmission device further comprises a beam splitting apparatus;

    the beam splitting apparatus is configured to transparently transmit, to the beam deflection apparatus, the N channels of spatial light that are obtained through beam reduction and that come from the first lens group; the beam deflection apparatus is configured to reflect spatial light whose deflection direction is adjusted and spatial light whose deflection direction is not adjusted to the beam splitting apparatus; and the beam splitting apparatus is configured to reflect, to the second lens group, each channel of spatial light reflected by the beam deflection apparatus.

11. The optical transmission device according to claim 10, wherein the beam deflection apparatus is a reflective LCoS or a micro-electro-mechanical system MEMS micro-mirror.

12. The optical transmission device according to any one of claims 1 to 11, wherein a size of a spot existing after the second lens group performs beam expansion on each channel of spatial light is the same as a size of a spot existing before the first lens group performs beam reduction on each channel of spatial light.

13. A space optical communication device, comprising an optical transceiver apparatus and the optical transmission device according to any one of claims 1 to 12, wherein N output ends of the optical transceiver apparatus are respectively connected to input ends of N fiber collimators in the optical transmission device through N fibers, and N is an integer greater than 1; and the optical transceiver apparatus is configured to respectively output N optical signals to the N fiber collimators through the N fibers.

14. The space optical communication device according to claim 13, wherein the optical transceiver apparatus comprises an optical transceiver and an optical splitter, an output end of the optical transceiver is connected to an input end of the optical splitter through a fiber, and N output ends of the optical splitter are respectively connected to the input ends of the N fiber collimators through the N fibers;

    the optical transceiver is configured to output an optical signal; and the optical splitter is configured to: split the optical signal to obtain N optical signals, and respectively transmit the N optical signals to the N fiber collimators through the N fibers.

15. The space optical communication device according to claim 13, wherein the optical transceiver apparatus comprises N optical transceivers, and output ends of the N optical transceivers are respectively connected to the input ends of the N fiber collimators through the N fibers; and the N optical transceivers are configured to: output N optical signals, and respectively transmit the N optical signals to the N fiber collimators through the N fibers.

16. The space optical communication device according to claim 15, wherein wavelengths of at least two of the N optical signals are different.

17. The space optical communication device according to any one of claims 13 to 16, wherein the space optical communication device is an access point AP.

18. The space optical communication device according to any one of claims 13 to 17, wherein the optical transceiver apparatus is an optical line terminal OLT.

FIG. 1

FIG. 2

FIG. 3

Large-angle
incident light

Stray light
crosstalk

Large-angle
emergent light

Stray light
crosstalk

Small-angle
incident light

Small-angle
emergent light

Beam deflection component

FIG. 4

20

30

40

50

F

F

F

F

FIG. 5(a)

FIG. 5(b)

FIG. 6

FIG. 7

FIG. 8

FIG. 9

FIG. 10

FIG. 11

## INTERNATIONAL SEARCH REPORT

International application No.

**PCT/CN2022/120557**

| A. | CLASSIFICATION OF SUBJECT MATTER |
|---|---|

G02B 6/32(2006.01)i; H04B 10/11(2013.01)i

According to International Patent Classification (IPC) or to both national classification and IPC

| B. | FIELDS SEARCHED |
|---|---|

Minimum documentation searched (classification system followed by classification symbols)

G02B 6, H04B 10

Documentation searched other than minimum documentation to the extent that such documents are included in the fields searched

Electronic data base consulted during the international search (name of data base and, where practicable, search terms used)

CNABS, CNTXT, ENTXTC, VEN, CNKI: 空间光, H04B10/11+/ic/cpc, G02B 6/32/ic, 透镜, ((调 or 改变 or 偏转) 5d (角 or 方向)) or 转向, LCOs or 相控 or 超表面 or 微机电 or MEMS, 4f 3w系统, 焦点or 焦距or 焦平面, space, lens??, (((adjust+ or chang+ or deflect+ or tun+) 5d (angle or direction)) or steer+, 4f 3w system, focal

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2021223540 A1 (JAPAN AEROSPACE EXPLORATION AGENCY) 22 July 2021 (2021-07-22) description, paragraphs 2 and 67-74, and figure 4 | 1-2, 6-18 |
| A | US 2021223540 A1 (JAPAN AEROSPACE EXPLORATION AGENCY) 22 July 2021 (2021-07-22) entire document | 3-5, |
| A | US 2004258415 A1 (BOONE G. Boone et al.) 23 December 2004 (2004-12-23) entire document | 1-18 |
| A | CN 113156728 A (HUAWEI TECHNOLOGIES CO., LTD.) 23 July 2021 (2021-07-23) entire document | 1-18 |
| A | CN 111277334 A (SHANGHAI INSTITUTE OF OPTICS AND FINE MECHANICS, CHINESE ACADEMY OF SCIENCES) 12 June 2020 (2020-06-12) entire document | 1-18 |
| A | CN 112987185 A (SOUTHEAST UNIVERSITY) 18 June 2021 (2021-06-18) entire document | 1-18 |

☑ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **22 December 2022** | **28 January 2023** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/120557** |

### C.    DOCUMENTS CONSIDERED TO BE RELEVANT

| Category* | Citation of document, with indication, where appropriate, of the relevant passages | Relevant to claim No. |
| --- | --- | --- |
| A | US 2008056723 A1 (GILES RANDY CLINTON et al.) 06 March 2008 (2008-03-06) entire document | 1-18 |
| A | US 2008002932 A1 (ZHENG XUEZHE et al.) 03 January 2008 (2008-01-03) entire document | 1-18 |
| A | CN 102122096 A (HARBIN INSTITUTE OF TECHNOLOGY) 13 July 2011 (2011-07-13) entire document | 1-18 |

Form PCT/ISA/210 (second sheet) (January 2015)

INTERNATIONAL SEARCH REPORT
Information on patent family members

International application No.

**PCT/CN2022/120557**

| Patent document cited in search report | | | Publication date (day/month/year) | Patent family member(s) | | | Publication date (day/month/year) |
|---|---|---|---|---|---|---|---|
| US | 2021223540 | A1 | 22 July 2021 | JP | 2021113925 | A | 05 August 2021 |
| US | 2004258415 | A1 | 23 December 2004 | None | | | |
| CN | 113156728 | A | 23 July 2021 | None | | | |
| CN | 111277334 | A | 12 June 2020 | None | | | |
| CN | 112987185 | A | 18 June 2021 | None | | | |
| US | 2008056723 | A1 | 06 March 2008 | None | | | |
| US | 2008002932 | A1 | 03 January 2008 | None | | | |
| CN | 102122096 | A | 13 July 2011 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202111131236